# EUROPÄISCHE PATENTSCHRIFT

(11) **EP 0 718 219 B1**
(45) Veröffentlichungstag und Bekanntmachung des Hinweises auf die Patenterteilung: **06.06.2001**
(21) Anmeldenummer: 95890220.7
(22) Anmeldetag: 18.12.1995
(51) Int. Cl.: B65G 47/14, B65G 47/26

(54) **Vereinzelungsvorrichtung**
Singulating device
Dispositif pour individualiser des objets

(30) Priorität: 20.12.1994 AT 236594
(43) Veröffentlichungstag der Anmeldung: 26.06.1996
(73) Patentinhaber: Binder & Co. Aktiengesellschaft, 8200 Gleisdorf (AT)
(72) Erfinder: Glawitsch, Gerhard, A-8200 Gleisdorf (AT)
(74) Vertreter: Kliment, Peter, Dipl.-Ing.

(56) Entgegenhaltungen:
- US-A- 4 669 604
- US-A- 4 768 643

## Beschreibung

Die Erfindung betrifft eine Vorrichtung zum Vereinzeln von Körpern, gemäß dem Oberbegriff des Anspruches 1.

Hohlkörper, insbesondere Behälter aus Papier, Kunststoffen oder Metallen werden häufig als Verpackungsmaterial für verschiedene Produkte verwendet. Aus transportwirtschaftlichen Überlegungen trachtet man danach die Behälter besonders leicht auszuführen. In der Lebensmittelindustrie werden aufgrund hygienischer Erfordernisse Einwegverpackungen häufig angewendet. Verpackungen aus solchen Hohlkörpern sind dem Konsumenten als Leichtflaschen, Becher oder Blisterverpackungen bekannt.

Zur Schonung der Rohstoffe und der Umwelt ist der Gesetzgeber, Industrie, und Verbraucher bemüht, einen Teil des aus der Verpackung anfallenden Abfalles wiederzuverwenden, was in der Fachsprache als "Recycling" bezeichnet wird. In wirtschaftlicher Sicht ist ein "Recycling" nur machbar, wenn hochmechanisierte bzw. automatisierte Anlagen zur Verfügung stehen. Um aus Verpackungsabfall brauchbare Ausgangsstoffe zu gewinnen ist eine Kette von Bearbeitungsschritten erforderlich. Einer dieser Schritte ist das Trennen bzw. Sortieren der Gegenstände, was in der Regel voraussetzt, daß bestimmte qualitative oder quantitative Merkmale wie Materialien, Größe und Gestalt von einer Vorrichtung erkannt werden. Um ein eindeutiges Erkennen zu ermöglichen müssen die Gegenstände aber einzeln an der Erkennungseinrichtung vorbeigeführt werden. Das geschieht durch eine Vorrichtung, die die Gegenstände aus einem Haufwerk sicher voneinander trennt und einzeln zur nachfolgenden Bearbeitungsstufe weiterbefördert.

Eine derartige Vorrichtung ist beispielsweise aus der französischen Patentanmeldung FR-PS 2 259 768 bekannt durch die gleichartige lose aufeinanderliegende Platten voneinander getrennt werden. Dies geschieht mit Hilfe eines in einem feststehendem Zylinder angeordneten drehbaren Kegels, der während des Betriebes eine Drehrichtungsumkehr erfährt. Dazu ist ein eigener Mechanismus zur Steuerung des zeitlichen Ablaufes erforderlich. Insbesondere handelt es sich bei den zu trennenden Platten um massive metallische Bremsscheiben, die durch ihr Gewicht der Vereinzelungsgeschwindigkeit Grenzen setzt.

Weiters wurde durch die DE-OS 24 39 136 eine Vorrichtung bekannt. Bei dieser ist ein Drehteller vorgesehen, in dessen zentralem Bereich die zu behandelnden Körper, meist gleichartige, parallelepipedförmige Körper aufgegeben werden. Oberhalb dieses Drehtellers ist eine im wesentlichen durch aneinandergereihte Sehnen einer geometrischen Schneckenlinie gestaltete Führung vorgesehen, die nahe des Zentrums des Drehtellers beginnt und deren Krümmung sich nach außen zu vermindert und die Gegenstände nach außen drängt, sodaß diese an einer vorgesehenen Stelle über den Rand des Drehtellers auf ein Förderband fallen.

Diese bekannte Einrichtung dient allerdings weniger einer Vereinzelung, sondern einer Ausrichtung der einzelnen Gegenstände, die durch die Reibung derselben an der Führung bedingt ist.

Weiters wurde durch die US-PS 5 248 025 eine Einrichtung bekannt, bei im Zentrum eines Drehtellers ein Konus aufgesetzt ist, an dessen Mantelfläche die Aufgabe einer Vielzahl gleicher Gegenstände, insbesondere Tabletten erfolgt. Dieses Drehteller ist von einer Zylinderwand umgeben, as lediglich eine Austragsöffnung aufweist, die von einer Führung durchsetzt ist, deren lichte Breite dem Durchmesser eine Tablette entspricht.

Bei dieser Einrichtung kommt es zwar zu einer Vereinzelung, bzw. einer Aneinanderreihung der Tabletten, wobei die Führung einerseits Zylinderwand tangential fortsetzt und eine trichterfömige Öffnung zur Abfuhr und Ausrichtung der Tabletten begrenzt.

Eine echte Vereinzelung von Gegenständen mit einem deutlichen Abstand voneinander ist mit dieser Einrichtung nicht möglich, insbesondere nicht, wenn die Gegenstände in ihrer Größe und Gestalt zumindest in geringem, wenn auch merklichen Ausmaß variieren können. Letztlich kommt es im bekannten Fall aufgrund des mangelnden Antriebs im Bereich der Führung zu einem Abbremsen der Tabletten, sodaß diese dicht an dicht liegend ausgeschoben werden.

Weiters wurde durch die US-PS 4 768 643 eine Vereinzelungseinrichtung für zylindrische Körper gleicher Größe und Form mit elastisch verformbare Wänden bekannt. Bei dieser Lösung werden die Körper stehend der Vereinzelungseinrichtung zugeführt und stehend vereinzelt, wobei die Körper auf einem über einen Saugkasten führenden und mit Durchbrechungen aufweisenden Förderband geführt werden, überdem eine senkrecht zum Förderband und in einem geringen Abstand von über diesem gehaltene Ablenkflächen angeodnet sind. Dabei werden die in einem Randbereich zugeführten Körper aufgrund einer Durchbrechungen des Saugkastens abdeckenden und eine schräg zur Förderrichtung verlaufende Kante aufwesiendes Abdeckblech früher vom Förderband erfaßt und von diesem abgeführt als die übrigen in einer besonders gestalteten Formation zugeschobenen Behälter. Dabei werden diese Behälter in eine an die Ablaufkante der Ablenkfläche anschließende Führung, deren Breite dem Durchmesser eines Behälers entspricht, zugeführt. die übrigen werden durch die schräg zur Förderrichtung verlaufende Ablenkfäche ebenfalls in die durch zwei parallel laufende Führungsschienen gebildete Führung gedrängt und reihen sich nacheinander in diese ein.

Der Nachteil dieser Lösung besteht in dem hohen Betriebsaufwand, der durch die erforderliche Aufrechterhaltung eines Unterdrucks im Saugkasten bedingt ist.

Weiters wurde durch die DE-OS 25 41 813 eine Vereinzelungseinrichtung für Körper gleicher Größe und Gestalt, insbesondere Tabletten bekannt, bei der die zu vereinzelnden Körper über ein Förderband zugeführt und durch eine schräg zur Förderrichtung und senkrecht zu dieser aufragenden Ablenkfläche auf eine Anordnung von seitlich dem Förderband angeordneten Förderbändern, die mit unterschiedlichen Geschwindigkeiten angetrieben sind und über die sich die Ablenkfläche ebenfalls erstreckt und an die ein Abförderband seitlich anschließt, das mit einer geringeren Geschwindigkeit angetrieben als das benachbarte Förderband der mit unterschiedlichen Geschwindigkeit angetrieben Förderbändern. Durch die Anordnung von mehreren mit unterschiedlicher Geschwindigkeit antreibbaren Förderbändern kommt es in Verbindung mit der Ablenkfläche zu einer Vereinzelung der Körper.

Der Nachteil dieser Anordnung liegt in dem hohen konstruktiven Aufwand. Außerdem ist eine solche Einrichtung nur für Körper mit einer hohen Standfestigkeit geeignet, nicht aber für relativ leichte und wenig standsichere Hohlkörper.

Ziel der Erfindung ist es, eine Vorrichtung der eingangs erwähnten Art vorzuschlagen, die ein sicheres Vereinzeln von Körpern ermöglicht, die einander zwar in Form und Größe ähnlich sind, wobei der Begriff "ähnlich" nicht im streng mathematischen Sinne zu verstehen ist, sondern in dem Sinne, daß sich die Körper in Form und Größe von einander in merklichem Ausmaß unterscheiden und die auch für wenig standsichere Körper geeignet ist.

Erfindungsgemäß wird dies bei einer Vorrichtung der eingangs erwähnten Art durch die kennzeichnenden Merkmale des Anspruches 1 erreicht.

Bei der Vorrichtung kann eine geradlinigen Fördereinrichtung vorgesehen sein, die aufgrund ihres unendlich großen Radius und der gleichen Winkelgeschwindigkeit eine über ihre Breite gleiche Fördergeschwindigkeit aufweist.

Die Fördereinrichtung kann durch ein im wesentlichen mit gleichförmiger Geschwindigkeit laufendes Förderband gebildet sein, doch sind auch Fördereinrichtungen in Form eines Rollenförderers mit zumindest z.T. antreibbaren Rollen oder ein Ketten- oder Gliederförderer denkbar. Außerdem ist es auch möglich einen ringförmigen Drehteller vorzusehen. Grundsätzlich können als Fördereinrichtungen alle verwendet werden, die eine im wesentlichen glatte Oberfläche im Förderbereich aufweisen, wobei jedoch aus Gründen eines einfachen, Aufbaues Förderbänder vorzuziehen sind.

Die über der Fördereinrichtung angeordneten Leiteinrichtungen bewirken ein Abdrängen der gegebenenfalls nebeneinander liegenden Körper in Richtung zu einer Kante der Fördereinrichtung hin, sodaß bei nebeneinander liegenden Körpern der äußere von der Fördereinrichtung abfällt. Außerdem wird durch den schrägen Verlauf der Ablenkflächen auch sichergestellt, daß nebeneinander liegende Körper zu unterschiedlichen Zeitpunkten an den Ablenkflächen anstoßen und dadurch zu unterschiedlichen Zeitpunkten abgebremst, bzw. abgelenkt werden, wodurch sich die Körper gegeneinander verschieben und auf diese Weise vereinzelt werden.

Durch die vorgesehene mehrmaligen Ablenkung der Körper während ihres Transportes auf der Fördereinrichtung ergibt sich eine sehr sichere Vereinzelung der Körper auch dann, wenn sich diese in Form und Größe voneinander etwas unterscheiden.

Durch die Merkmale des Anspruches 2 ergibt sich auch der Vorteil, daß die Größe der zu vereinzelnden Körper begrenzt werden kann. Außerdem wird dadurch auch ein sehr hohes Maß an Sicherheit der Vereinzelung der Körper erreicht.

Durch die Maßnahmen nach dem Anspruch 3 wird ein Abfallen von Körpern an der zweiten Kante der Fördereinrichtung weitgehend vermieden, wobei sich beim Ablaufen von der vor der Mitte der Fördereinrichtung endenden Ablenkfläche eine sehr weitgehende Vereinzelung der Körper ergibt.

Durch die Merkmale des Anspruches 4 ergibt sich der Vorteil, daß bei nebeneinander liegenden Körpern der der Abwurfkante nähere durch das Anschlagen an dem im wesentlichen senkrecht zur Förderrichtung verlaufenden Abschnitt der von der Abwurfkante wegführenden Leiteinrichtung entsprechend gebremst wird und sich meist auch um eine senkrecht zu seiner Auflagefläche verlaufende Achse dreht, wodurch die beiden Körper vereinzelt werden.

Die Merkmale des Anspruches 5 bedingen, daß jeder auf die Fördereinrichtung aufgegebene Körper mit einer Ablenkfläche einer Leiteinrichtung in Berührung kommen muß und dadurch eine Vereinzelung von allenfalls nebeneinander liegenden Körpern bewirkt wird.

In diesem Zusammenhang ist es besonders vorteilhaft, die Merkmale des Anspruches 6 vorzusehen.

Um eine Ausrichtung der Körper in Förderrichtung zu erreichen, können die Merkmale des Anspruches 7 vorgesehen werden.

Die Merkmale des Anspruches 8 ermöglichen einen einfachen Aufbau der Leiteinrichtungen.

Durch die Merkmale des Anspruches 9 wird ein kontinuierlicher Betrieb der Vorrichtung mit geringem Personalaufwand ermöglicht.

Durch die Merkmale des Anspruches 10 ermöglichen eine Unterscheidung der einzelnen Körper nach bestimmten Kriterien, z.B. dem Material aus dem die einzelnen Körper hergestellt sind, insbesondere wenn nach der Zusammensetzung des Gemisches von verschiedenen Körpern zu erwarten ist, daß lediglich zwei verschiedene Arten von Körpern im angelieferten Gemisch enthalten sind.

Sind die Körper aus einem vielfältigeren Gemisch zu sortieren, so kann der erfindungsgemäßen Vereinzelungseinrichtung eine Sortiereinrichtung nachgeschaltet sein, bei der die vereinzelten Körper an einer größeren Anzahl von Sensoren einzeln vorbeigeführt und nach bestimmten Kriterien sortiert werden.

Durch die Merkmale des Anspruches 11 ist es möglich den Winkel der Ablenkflächen der leiteinrichtungen zur Förderrichtung und die breite der freien Förderwege zwischen den ablaufenden Kanten der Ablenkflächen und der Abwurfkante der Fördereinrichtung je nach den gegebenen Erfordernissen einzustellen.

Eine weitere Anpassung und Optimierung der Vereinzelung der Hohlkörper ist durch die Merkmale des Anspruches 12 möglich.

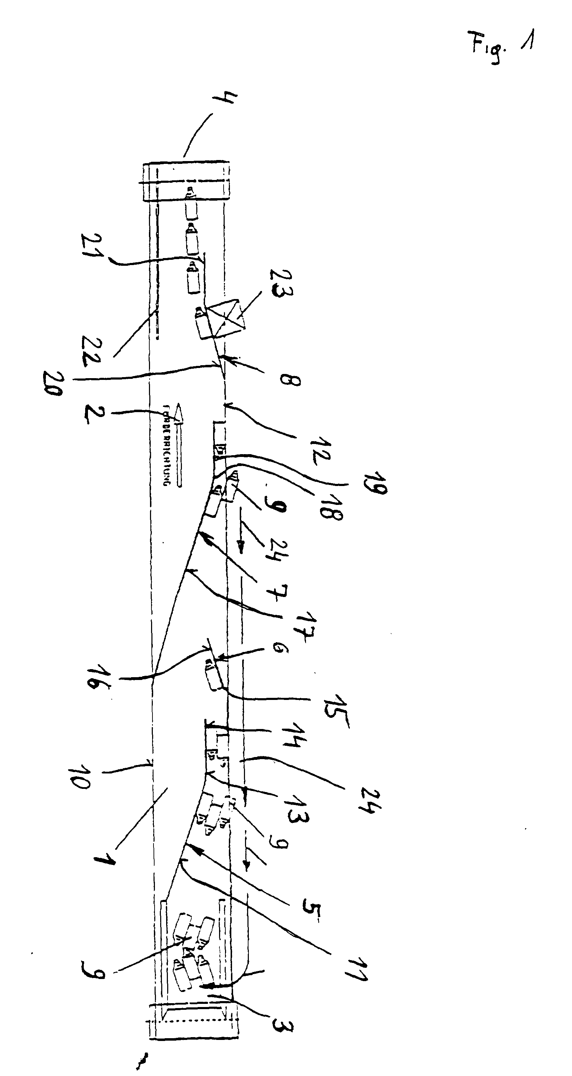

Die Erfindung wird nun anhand der Zeichnung näher erläutert, die schematisch eine erfindungsgemäße Vorrichtung zeigt.

Die erfindungsgemäße Vorrichtung weist eine durch ein umlaufendes Förderband gebildete Fördereinrichtung 1 auf, deren Fördertrum in Förderrichtung 2 im wesentlichen mit gleichförmiger, jedoch einstellbarer Geschwindigkeit von einer Aufgabeposition 3 zu einer Abgabestelle 4 läuft.

In einem geringen Abstand oberhalb des Fördertrums der Fördereinrichtung 1 sind Leiteinrichtungen 5, 6, 7, 8 ortsfest gehalten. Dabei ist der Abstand der Unterkante der Leiteinrichtungen 5, 6, 7, 8 kleiner als die Höhe von jenen zu vereinzelnden Körpern 9, die die geringste Höhe aufweisend.

Die Leiteinrichtung 5 weist eine sich von einer Kante 10 der Fördereinrichtung 1 schräg in Förderrichtung 2 erstreckende Ablenkfläche 11 auf, die in einem Abstand von einer Abwurfkante 12 der Fördereinrichtung 1 endet, sodaß zwischen der Ablaufkante 13 der Ablenkfläche 11 und der Abwurfkante 12 der Fördereinrichtung 1 ein freier Förderweg für die zu vereinzelnden Körper 9 frei bleibt.

An die Ablaufkante 13 der Ablenkfläche 11 der Leiteinrichtung 5 schließt eine Gleitfläche 14 an, die sich in Förderrichtung 2 erstreckt und den freien Förderweg begrenzt.

In Förderrichtung 2 folgt auf die Leiteinrichtung 5 eine Leiteinrichtung 6, die sich im wesentlichen von der Abwurfkante 12 schräg in Richtung zur Mitte der Fördereinrichtung 1 zu erstreckt. Dabei weist die Leiteinrichtung 6 einen an die Abwurfkante 12 unmittelbar anschließenden Abschnitt 15 auf, der sich im wesentlichen senkrecht zur Förderrichtung 2 erstreckt. Dieser Abschnitt 15 weist eine Breite auf, die im wesentlichen einen Viertel der Breite oder des Durchmessers der größten der zu vereinzelnden Köper 9 entspricht.

An diesen Abschnitt 15 schließt sich eine in Förderrichtung 2 schräg zur Mitte der Fördereinrichtung 1 hin verlaufende Ablenkfläche 16 an, die vor der Mitte der Fördereinrichtung 1 endet.

Dabei deckt die senkrecht zur Förderrichtung 2 projizierte Breite der Leiteinrichtung 6 die Breite des zwischen der Ablaufkante 13 der Leiteinrichtung 5 und der Abwurfkante 12 verbleibenden freien Förderweg ab.

In Förderrichtung 2 ist der Leiteinrichtung 6 eine weitere Leiteinrichtung 7 nachgeordnet, die sich von der Kante 10 in Förderrichtung schräg zur Abwurfkante 12 hin erstreckt. Bei der Leiteinrichtung 7 reicht die Ablenkfläche 17 näher an die Abwurfkante 12 heran als die Ablenkfläche 11 der vorgeordneten Leiteinrichtung 5, sodaß sich ein geringerer Abstand zwischen der Ablaufkante 18 und der Abwurfkante 12 ergibt, als bei der Leiteinrichtung 5 und damit auch ein schmälerer freier Förderweg. An die Ablaufkante 18 der Ablenkfläche 17 schließt sich, wie bei der Leiteinrichtung 5, eine sich in Förderrichtung 2 erstreckende Gleitfläche 19 an.

Der Leiteinrichtung 7 ist die Leiteinrichtung 8 nachgeordnet, die sich von der Abwurfkante 12 schräg zur Mitte der Fördereinrichtung 1 hin erstreckt. Dabei schließt an die an der Abwurfkante 12 beginnende Ablenkfläche 20 eine sich in Förderrichtung 2 erstreckende Gleitfläche 21 an. Diese begrenzt in Verbindung mit einer in Förderrichtung 2 verlaufenden Führung 22 einen Förderweg für die vereinzelten Körper 9, wobei ein herabfallen der Körper 9 von der Fördereinrichtung verhindert ist.

Im Bereich der Leiteinrichtung 8 ist eine Erkennungssensorik 23 angeordnet, die die vereinzelten Körper 9 nach bestimmten Kriterien untersucht, bzw. erkennt, z.B. nach deren Material oder Farbe.

Die vereinzelten Körper 9 fallen über die Abgabestelle 4 auf eine nicht dargestellte Bearbeitungseinrichtung, z.B. einem Sortierer, der die einzelnen Körper 9 je nach den durch die Erkennungssensorik erfaßten Kriterien aussortiert und mit dieser über nicht dargestellte Signalleitungen verbunden ist.

Neben der Abwurfkante 12 der Fördereinrichtung 1 und tiefer als diese ist eine Rückführeinrichtung 24 angeordnet, die lediglich durch eine Kette von Pfeilen angedeutet ist. Diese führt über die Abwurfkante 12 abgefallene Körper 9 zur Aufgabeposition 3 zurück, sodaß diese wieder einer Vereinzelung zugeführt werden.

Wie aus der Zeichnung ersichtlich ist, werden die im Bereich der Aufgabeposition 3 aufgegebenen Körper 9 durch die Leiteinrichtung 5 zur Abwurfkante 12 hin abgelenkt, wobei ein Teil der Körper 9 auf die Rückführeinrichtung 24 fällt. Ein Teil der Körper 9 gelangt über den freien Förderweg zwischen der Ablaufkante 13 und der Abwurfkante 12 zur Leiteinrichtung 6, wobei der äußere Körper 9 an dem Abschnitt 15 der Leiteinrichtung 6 anschlägt und gebremst wird, wogegen der innen liegende Körper lediglich zur Mitte der Fördereinrichtung 1 hin abgelenkt wird.

Dadurch kommt es zu einer Vereinzelung der beiden ursprünglich nebeneinander liegenden Körper 9.

In weiterer Folge werden die Körper 9 durch die Leiteinrichtung 7 gegen die Abwurfkante 12 zu abgelenkt. Da der freie Förderweg zwischen der Ablaufkante 18 und der Abwurfkante 12 schmäler ist als zwischen der Ablaufkante 13 und der Abwurfkante 12, werden allenfalls noch nebeneinander liegende Körper 9 abgeworfen und über die Rückführeinrichtung 24, z.B. ein Förderband zur Aufgabeposition 3 befördert.

Schließlich gelangen die vereinzelten Körper 9 aufeinanderfolgend zur Leiteinrichtung 8, von der sie in Richtung zur Mitte der Fördereinrichtung 1 hin abgelenkt werden, wobei sie in der Erkennungssensorik 23 vorbeigeleitet und von dieser nach bestimmten Kriterien untersucht und erkannt werden.

## Patentansprüche

1. Vorrichtung zum Vereinzeln von Körpern (9), insbesondere leichten in Gestalt und Größe ähnlichen Hohlkörpern, mit einer im wesentlichen kontinuierlich und über die Breite mit gleicher Winkelgeschwindigkeit fördernden und mindestens eine in Förderrichtung (2) verlaufende Kante (10, 12) aufweisenden Fördereinrichtung (1), auf der die zu vereinzelnden Körper (9) lose aufliegen, mindestens einer ortsfest, in einem die jeweils größte Abmessung der zu vereinzelnden Körper (9) senkrecht zur Fördereinrichtung (1) wesentlich unterschreitendem Abstand zu dieser gehaltenen Leiteinrichtung (5, 6, 7, 8), die mit einer mit der Bewegungsrichtung der Fördereinrichtung (1) einen Winkel einschließenden Ablenkfläche (11, 16, 17, 20) versehen ist, und einer Aufgabeposition (3) für die Körper, wobei die Ablenkfläche (11, 17) der Leiteinrichtung (5, 7) mit ihrer, in Förderrichtung (2) gesehen, Ablaufkante (13, 18) in einem Abstand vor der nächstliegenden in Förderrichtung verlaufenden freien Abwurfkante (12) der Fördereinrichtung (1), z.B. eines umlaufenden Förderbandes endet, sodaß zwischen der Ablaufkante (13, 18) der Ablenkfläche (11, 17) und der nächstliegenden Abwurfkante (12) der Fördereinrichtung (1) ein freier Förderweg für zu vereinzelnden Körper (9) frei bleibt, **dadurch gekennzeichnet,** daß die Ablenkflächen (11, 16; 18, 20) von in Förderrichtung (2) der Fördereinrichtung (1) unmittelbar aufeinanderfolgenden Leiteinrichtungen (5, 6, 7, 8) mit ihren ablaufenden Enden verschiedenen Längskanten (11, 12) der Fördereinrichtung (1) zugekehrt sind.

2. Vorrichtung nach Anspruch 1, **dadurch gekennzeichnet,** daß die ein und derselben Kante (12) der Fördereinrichtung (1) zugekehrten Ablaufkanten (13, 18) der Ablenkflächen (11, 17) der ersten und dritten Leiteinrichtungen (5, 7) in Förderrichtung (2) gesehen, fortschreitend näher an diese als Abwurfkante (12) dienende Längskante heranreichen, wobei die Ablenkfläche (17) der, in Förderrichtung (2) gesehen, dritten Leiteinrichtung (7) im wesentlichen bis auf einen der halben Breite, bzw. dem halben Durchmesser der größten zu vereinzelnden Körper (9) entsprechenden Abstand an die Abwurfkante (12) heranreicht.

3. Vorrichtung nach Anspruch 2, **dadurch gekennzeichnet,** daß die sich von der Abwurfkante (12) in Förderrichtung (2) schräg gegen die zweite Kante (10) der Fördereinrichtung (1) zu erstreckende Ablenkfläche mindestens einer zweiten Leiteinrichtung (6), die zwischen zwei sich zur Abwurfkante (12) hin erstreckende Ablenkflächen (11, 17) aufweisenden ersten und dritten Leiteinrichtungen (5, 7) angeordnet ist, bereits vor der Längsmitte der Fördereinrichtung (1) enden.

4. Vorrichtung nach Anspruch 2 und 3, **dadurch gekennzeichnet,** daß die von der Abwurfkante (12) in Förderrichtung (2) schräg wegführende zweite Leiteinrichtung (6) einen an die Abwurfkante (12) unmittelbar anschließenden Abschnitt (15) aufweist, der im wesentlichen senkrecht zur Förderrichtung (2) verläuft und eine Breite aufweist, die vorzugsweise ca. einem Viertel der Breite, bzw. des Durchmessers des größten Teiles der zu vereinzelnden Körper (9) entspricht.

5. Vorrichtung nach einem der Ansprüche 2 bis 4, **dadurch gekennzeichnet,** daß die Ablenkflächen (11, 16, 17, 20) der Leiteinrichtungen (5, 6, 7, 8), in Förderrichtung (2) gesehen, einander überlappen.

6. Vorrichtung nach einem der Ansprüche 1 bis 5, **dadurch gekennzeichnet,** daß die senkrecht zur Förderrichtung (2) projizierte Länge der sich in Förderrichtung (2) von der Abwurfkante (12) weg erstreckenden Ablenkfläche(n) (16) der zweiten Leiteinrichtung (6) der Breite des freien Förderweges zwischen der Ablaufkante (13) der Ablenkfläche (11) der in Förderrichtung vorgeordneten ersten Leiteinrichtung (5) und der Abwurfkante (12) der Fördereinrichtung (1) entspricht.

7. Vorrichtung nach Anspruch 1 bis 6, **dadurch gekennzeichnet,** daß an die in Förderrichtung (2) zur Abwurfkante (12) der Fördereinrichtung (1) hin verlaufenden Ablenkflächen (11, 17) der ersten und dritten Leiteinrichtungen (5, 7) eine parallel zur Förderrichtung (2) und sich in dieser erstreckende Gleitfläche (14, 19) der jeweiligen Leiteinrichtung (5, 7) anschließt.

8. Vorrichtung nach Anspruch 1 bis 7, **dadurch gekennzeichnet,** daß die Leiteinrichtung(en) (5, 6, 7, 8) aus jeweils einer oder mehreren, miteinander verbundenen Platten gebildet sind.

9. Vorrichtung nach Anspruch 1 bis 8, **dadurch gekennzeichnet,** daß neben und unterhalb der Abwurfkante (12) der Fördereinrichtung (1) eine in Richtung zur Aufgabeposition (3) für die zu vereinzelnden Körper (9) hin fördernde Rückführeinrichtung (24) angeordnet ist.

10. Vorrichtung nach Anspruch 1 bis 9, **dadurch gekennzeichnet,** daß die Ablenkfläche (20) der, in Förderrichtung (2) gesehen, letzten Leiteinrichtung (8) gegen die Längsmitte der Fördereinrichtung (1) zu gerichtet ist und im Bereich dieser Ablenkfläche (20) mindestens eine Erkennungssensorik (23) angeordnet ist.

11. Vorrichtung nach Anspruch 1 bis 10 **dadurch gekennzeichnet,** daß die Leiteinrichtungen (5, 6, 7, 8) verstellbar gehalten sind.

12. Vorrichtung nach Anspruch 1, **dadurch gekennzeichnet,** daß die Fördergeschwindigkeit der Fördereinrichtung (1) in Abhängigkeit vom Gewicht der zu vereinzelnden Körper (9) veränderbar ist.

## Claims

1. An apparatus for singularizing bodies (9), in particular light hollow bodies which are similar in shape and size, with a conveying device (1) which conveys substantially continuously and with the same angular velocity over the width and which comprises at least one edge (10, 12) extending in the direction of conveyance (2), on which conveying device the bodies (9) to be singularized rest in a loose manner, with at least one stationary guide device (5, 6, 7, 8) which is held at a distance to the same which falls substantially below the respective largest dimension of the bodies (9) to be singularized perpendicular to the conveying device (1), which guide device is provided with a deflection area (11, 16, 17, 20) which encloses an angle with the direction of movement of the conveying device (1), and with a feed position (3) for the bodies, with the deflection area (11, 17) of the guide device (5, 7) ending with its delivery edge (13, 18), as seen in the direction of conveyance, at a distance from the closest free ejection edge (12) of the conveying device (1) extending in the direction of conveyance, e.g. a revolving covneyor belt, so that a free conveying path for the bodies (9) to be singularized remains free between the delivery edge (13, 18) of the deflection area (11, 17) and the closest ejection edge (12) of the conveying device (1), characterized in that the deflection areas (11, 16; 18, 20) of guide devices (5, 6, 7, 8) which follow immediately successively in the direction of conveyance (2) of the conveying deivce (1) face different longitudinal edges (10, 12) of the conveying device (1) with their delivery ends.

2. An apparatus as claimed in claim 1, characterized in that the delivery edges (13, 18) of the deflection areas (11, 17) of the first and third guide devices (5, 7) which face one and the same edge (12) of the conveying device (1) reach up progressively closer, as seen in the direction of conveyance, to this longitudinal edge which is used as an ejection edge (12), with the deflection area (17) of the guide device (7) which is the third one in the direction of conveyance reaches substantially up to the delivery edge (12) with a distance corresponding to half the width or half the diameter of the body (9) to be singularized.

3. An apparatus as claimed in claim 2, characterized in that the deflection area of at least one second guide device (6), which deflection area extends in the direction of conveyance (2) from the ejection edge (12) in an inclined manner towards the second edge (10) of the conveying device
(1) and which second guide device is arranged between two first and third guide devices (5, 7) which are provided with deflection areas (11, 17) extending towards the ejection edge (12), ends already before the longitudinal center of the conveying device (1).

4. An apparatus as claimed in claim 2 and 3, characterized in that the second guide device (6) which leads away in an inclined manner in the direction of conveyance (2) from the ejection edge (12) is provided with a section (15) which is immediately adjacent to the ejection edge (12), extends substantially perpendicular to the direction of conveyance (2) and is provided with a width which preferably corresponds approximately to one-quarter of the width or the diameter of the largest part of the body (9) to be singularized.

5. An apparatus as claimed in one of the claims 2 to 4, characterized in that the deflection areas (11, 16, 17, 20) of the guide devices (5, 6, 7, 8) overlap one another, as seen in the direction of conveyance (2).

6. An apparatus as claimed in one of the claims 1 to 5, characterized in that the length as projected perpendicularly to the direction of conveyance (2) of the deflection area(s) (16)extending from the ejection edge (12) of the second guide device (6) corresponds to the width of the free path of conveyance between the delivery edge (13) of the deflection area (11) of the first guide device (5) which is upstream as seen in the direction of conveyance and the ejection edge (12) of the conveying device (1).

7. An apparatus as claimed in claim 1 to 6, characterized in that adjacent to the deflection areas (11, 17) of the first and third guide devices (5, 7) which extend in the direction of conveyance (2) towards the ejection edge (12) of the conveying device (1) there is provided a sliding surface (14, 19) of the respective guide device (5, 7) which extends parallel to the direction of conveyance (2) and in the same.

8. An apparatus as claimed in claim 1 to 7, characterized in that the guide device(s) (5, 6, 7, 8) is/are each formed from one or several mutually connected plates.

9. An apparatus as claimed in claim 1 to 8, characterized in that adjacent to and below the ejection edge (12) of the conveying device (1) there is arranged a return device (24) which conveys in the direction towards the delivery position (3) for the bodies (9) to be singularized.

10. An apparatus as claimed in claim 1 to 9, characterized in that the deflection area (20) of the guide device (8) which is the last one in the direction of conveyance (2) faces the longitudinal center of the conveying device (1) and at least one detection sensor (23) is arranged in the zone of said deflection area (20).

11. An apparatus as claimed in claim 1 to 10, characterized in that the guide devices (5, 6, 7, 8) are held adjustably.

12. An apparatus as claimed in claim 1, characterized in that the conveying speed of the conveying device (1) can be changed depending on the weight of the bodies (9) to be singularized.

## Revendications

1. Dispositif pour séparer des objets (9), en particulier des objets creux légers, de forme et de taille similaires, avec un dispositif de transport (1) sensiblement continu et assurant un transport à une vitesse angulaire égale sur sa largeur, et présentant au moins une arête (10, 12) orientée dans le sens de transport (2), sur lequel les objets (9) à séparer sont posés sans fixation, au moins un dispositif de guidage (5, 6, 7, 8) maintenu à une distance du dispositif de transport (1) nettement inférieure à la plus grande dimension des objets (9) à isoler perpendiculairement à celui-ci, qui est pourvu d'un surface de déviation (11, 16, 17, 20) formant un angle avec le sens de déplacement du dispositif de transport (1), et avec une position de dépose (3) pour les objets, la surface de déviation (11, 17) du dispositif de guidage (5, 7) se terminant par son bord terminal (13, 18) dans le sens du transport (2) à distance du bord d'éjection (12) libre du dispositif de transport (1), par exemple d'une bande transporteuse continue, le plus proche dans le sens du transport, de telle sorte qu'entre le bord terminal (13, 18) de la surface de déviation (11, 17) et le bord d'éjection (12) du dispositif de transport (1) le plus proche, un trajet de transport reste libre pour les objets (9) à séparer, caractérisé en ce que les surfaces de déviation (11, 16; 18, 20) de dispositifs de guidage (5, 6, 7, 8) successifs dans le sens de transport (2) du dispositif de transport (1) sont orientées à leurs extrémités terminales vers des arêtes longitudinales (10, 12) différentes du dispositif de transport (1).

2. Dispositif selon la revendication 1, caractérisé en ce que les bords terminaux (13, 18) des surfaces de déviation (11, 17) des premier et troisième dispositifs de déviation (5, 7) dans le sens du transport (2), qui sont orientés vers la même arête (12) du dispositif de transport (1), se rapprochent progressivement de cette arête longitudinale servant de bord d'éjection (12), la surface de déviation (17) du troisième dispositif de guidage (7) dans le sens du transport allant sensiblement jusqu'à une distance par rapport au bord d'éjection (12) correspondant à la moitié de la largeur ou la moitié du diamètre du plus gros objet (9) à séparer.

3. Dispositif selon la revendication 2, caractérisé en ce que des surfaces de déviation s'étendant en oblique à partir du bord d'éjection (12) dans le sens de transport (2) vers la deuxième arête (10) du dispositif de transport (1) dans au moins un dispositif de guidage (6) disposé entre les premier et deuxième dispositifs de guidage (5, 7) présentant des surfaces de déviation (11, 17) s'étendant jusqu'au bord d'éjection (12) se terminent dès la moitié de la longueur du dispositif de transport (1).

4. Dispositif selon les revendications 2 et 3, caractérisé en ce que le deuxième dispositif de guidage (6) s'écartant en oblique du bord d'éjection (12) dans le sens du transport (2) présente une section (15) faisant immédiatement suite au bord d'éjection (12) qui est perpendiculaire au sens du transport (2) et dont la largeur correspond de préférence à un tiers environ de la largeur ou du diamètre du plus grand des objets (9) à séparer.

5. Dispositif selon l'une quelconque des revendications 2 à 4, caractérisé en ce que les surfaces de déviation (11, 16, 17, 20) des dispositifs de guidage (5, 6, 7, 8) se chevauchent dans le sens du transport (2).

6. Dispositif selon l'une quelconque des revendications 1 à 5, caractérisé en ce que la longueur, projetée perpendiculairement au sens du transport (2), de la surface ou des surfaces de déviation (16) du deuxième dispositif de guidage (6) s'écartant du bord d'éjection (12) correspond à la largeur du trajet de transport libre entre le bord terminal (13) de la surface de déviation (11) du premier dispositif de guidage disposé en amont dans le sens du transport et le bord d'éjection (12) du dispositif de transport (1).

7. Dispositif selon les revendications 1 à 6, caractérisé en ce que les surfaces de déviation (11, 17) des premier et troisième dispositifs de guidage (5, 7) orientées vers le bord d'éjection (12) du dispositif de transport (1) dans le sens du transport (2) sont suivies d'une surface de glissement (14, 19) du dispositif de guidage (5, 7) correspondant qui s'étend parallèlement au sens du transport (2) et dans celui-ci.

8. Dispositif selon les revendications 1 à 7, caractérisé en ce que le ou les dispositifs de guidage (5, 6, 7, 8) sont formés chacun d'une ou plusieurs plaques reliées entre elles.

9. Dispositif selon les revendications 1 à 8, caractérisé en ce qu'il est prévu près du bord d'éjection (12) du dispositif de transport (1) et sous celui-ci un dispositif de retour (24) réalisant un transport en direction de la position de dépose (3) pour les objets (9) à séparer.

10. Dispositif selon les revendications 1 à 9, caractérisé en ce que la surface de déviation (20) du dernier dispositif de guidage (8) dans le sens du transport (2) est orientée vers le milieu de la longueur du dispositif de transport (1) et au moins un capteur de reconnaissance (23) est disposé au niveau de cette surface de déviation (20).

11. Dispositif selon les revendications 1 à 10, caractérisé en ce que les dispositifs de guidage (5, 6, 7, 8) sont retenus de manière réglable.

12. Dispositif selon la revendication 1, caractérisé en ce que la vitesse de transport du dispositif de transport (1) peut être modifiée en fonction du poids des objets (9) à séparer.
